Europäisches Patentamt

European Patent Office

Office européen des brevets

(19)

(11) Veröffentlichungsnummer: **0 019 070**
**B1**

(12) # EUROPÄISCHE PATENTSCHRIFT

(45) Veröffentlichungstag der Patentschrift:
01.12.82

(51) Int. Cl.³: **B 60 C 11/00**

(21) Anmeldenummer: **80101730.2**

(22) Anmeldetag: **01.04.80**

(54) **Fahrzeugluftreifen.**

(30) Priorität: **12.05.79 DE 7913756 U**

(43) Veröffentlichungstag der Anmeldung:
**26.11.80 Patentblatt 80/24**

(45) Bekanntmachung des Hinweises auf die Patenterteilung:
**01.12.82 Patentblatt 82/48**

(84) Benannte Vertragsstaaten:
**BE DE FR GB IT NL**

(56) Entgegenhaltungen:
**CH-A-205 055**
**DE-A-2 340 761**
**FR-A-1 059 542**
**FR-A-2 238 603**
**FR-A-2 280 519**

(73) Patentinhaber: **Continental Gummi-Werke Aktiengesellschaft, Königsworther Platz 1 Postfach 169, D-3000 Hannover 1 (DE)**

(72) Erfinder: **von der Wall, Klaus, Blumenweg 4, D-3051 Wölpinghausen (DE)**

## Fahrzeugluftreifen

Die Erfindung betrifft einen Fahrzeugluftreifen mit einer im Bereich der Reifenschulter befindlichen umlaufenden Nut, die ebenso wie der darüber liegende Teil des Laufstreifens ausgerundet ist, wobei die umlaufende Nut und die sich radial nach aussen daran anschliessende Rundung von Radien etwa gleicher Grösse begrenzt sind.

Bei bekannten Fahrzeugluftreifen (FR-A-2 238 603) geht der dem Verlauf der Karkasse des Reifens entsprechend gekrümmte Laufflächenrand unmittelbar in die sich radial nach aussen an die umlaufende Nut anschliessende Rundung über; dadurch ergeben sich vergleichsweise grosse, vorzeitige Abnutzungen an den Laufflächenrändern.

Der Erfindung liegt die Aufgabe zugrunde, der Laufstreifenzone des Reifens im Bereich der Reifenschulter eine solche Kontur zu verleihen, dass die Abnutzung im Bereich des Laufflächenrandes im Vergleich zu den übrigen Teilen der Lauffläche nicht vorzeitig eintritt. Zugleich strebt die Erfindung eine gleichmässige Abnutzung des Laufflächenrandes an.

Zur Lösung dieser Aufgabe ist erfindungsgemäss der von einer stufenlos in den übrigen Teil der Lauffläche übergehenden, seitlich gerundeten Randrippe gebildete Laufflächenrand durch einen Krümmungsradius bestimmt, der etwa dreimal so gross ist wie die vorgenannten Radien.

Dadurch ergibt sich für den Laufflächenrand die Möglichkeit, vergleichsweise weich einzufedern, und zwar in der Weise, dass im Vergleich zu den übrigen Laufflächenzonen in bezug auf die Nachgiebigkeit keine wesentlichen Unterschiede mehr gegeben sind. Es wird auf diese Weise erreicht, dass im Bereich der meist am Laufflächenrand befindlichen Randrippe keine grössere bzw. vorzeitige Abnutzung im Vergleich zu den übrigen Laufflächenpartien eintritt.

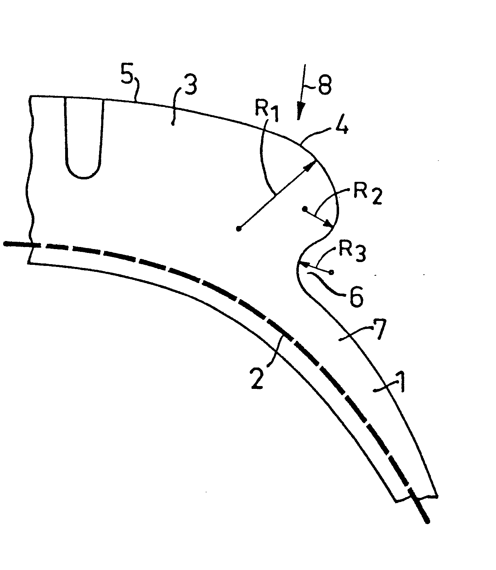

Ein Ausführungsbeispiel der Neuerung ist in der Zeichnung dargestellt.

Die Abb. zeigt einen Teilquerschnitt durch einen Fahrzeugluftreifen für Strassenfahrzeuge, und zwar eine Schulterzone des Reifens.

Der aus Gummi oder gummiähnlichen Stoffen bestehende Reifenkörper 1 hat eine durch einen gestrichelten Linienzug 2 angedeutete Karkasse und darüber im Bereich der Zenitpartie des Reifens einen Laufstreifen 3, der zu beiden Seiten durch eine Randrippe bei 4 begrenzt ist, die somit auch die Lauffläche 5 zur Seite hin abschliesst.

Die Randrippe bei 4 wird seitlich aussen durch eine Rundung z. B. in der Grössenordnung von 25 mm begrenzt. Dieser Radius ist mit $R_1$ bezeichnet. Dieser Rundung folgt eine weitere Rundung, die durch den Radius $R_2$ bestimmt ist, welcher jedoch nur etwa ein Drittel des Radius $R_1$ beträgt. Dieser Radius bestimmt den oberen Rand der umlaufenden Nut 6, die ihrerseits nach einem Radius $R_3$ ausgekehlt ist, welcher die Grösse von $R_2$ hat. Von der Nut 6 aus geht der Reifen in die Aussenfläche der Seitenwand 7 über.

Diese Ausführung der Reifenschulter ermöglicht ein vergleichsweise weiches Einfedern im Sinne des Pfeiles 8. Es wird ein gleichmässiger Abrieb erreicht.

**Patentanspruch**

Fahrzeugluftreifen mit einer im Bereich der Reifenschulter befindlichen umlaufenden Nut (6), die ebenso wie der darüber liegende Teil des Laufstreifens ausgerundet ist, wobei die umlaufende Nut (6) und die sich radial nach aussen daran anschliessende Rundung (bei $R_2$) von Radien etwa gleicher Grösse begrenzt sind, dadurch gekennzeichnet, dass der von einer stufenlos in den übrigen Teil der Lauffläche (5) übergehenden, seitlich gerundeten Randrippe (4) gebildete Laufflächenrand durch einen Krümmungsradius ($R_1$) bestimmt ist, der etwa dreimal so gross ist wie die vorgenannten Radien ($R_2$, $R_3$).

**Claim**

A pneumatic vehicle tyre having an encircling groove (6) which is located in the region of the shoulder of the tyre and which is rounded-off in a similar manner to the portion of the tread strip located thereabove, the encircling groove (6) and the rounded portion (at $R_2$), connected radially externally thereto, being defined by radii of substantially identical magnitude, characterised in that the edge of the tread surface is formed from a latterally rounded edge rib (4), which extends steplessly into the remaining portion of the tread surface (5), the edge of the tread surface being determined by a radius of curvature ($R_1$) which is approximately three times greater than the above-mentioned radii ($R_2$, $R_3$).

**Revendication**

Bandage pneumatique pour véhicule, comprenant une rainure périphérique (6) qui se trouve dans la région de l'épaulement du bandage, qui est arrondie de la même façon que la partie de la bande de roulement qui la surmonte, la rainure périphérique (6) et l'arrondi (en $R_2$) qui s'y raccorde radialement vers l'extérieur étant limitée par des rayons ayant à peu près la même valeur, caractérisé en ce que le bord de la surface de roulement formée par une côte marginale (4) arrondie latéralement, qui se raccorde sans gradin à la partie restante de la surface de roulement (5), est définie par un rayon de courbure ($R_1$) qui est à peu près trois fois plus grande que les rayons précités ($R_2$, $R_3$).